# EUROPEAN PATENT APPLICATION

(11) **EP 4 749 936 A1**
(43) Date of publication of application: **27.05.2026**
(21) Application number: 24856654.9
(22) Date of filing: 15.07.2024
(51) Int. Cl.: H04B 1/401, H01Q 1/24, H01Q 1/38, G01S 19/14, H01Q 21/00, H04W 84/06

(54) **METHOD AND DEVICE FOR PROVIDING SATELLITE COMMUNICATION SERVICE**

(30) Priority: 22.08.2023 KR 20230109496; 08.09.2023 KR 20230119655
(71) Applicant: Samsung Electronics Co., Ltd., Suwon-si, Gyeonggi-do 16677 (KR)
(72) Inventor: SUH, Younghoon, Suwon-si Gyeonggi-do 16677 (KR)
(74) Representative: Gulde & Partner
(86) International application number: PCT/KR2024/010115
(87) International publication number: WO 2025/042040

(57) **Abstract**

The present disclosure provides an electronic device for providing satellite communication. The electronic device of the present disclosure comprises: a housing including a conductive housing member; a printed circuit board disposed in the housing; a first antenna structure which is formed using a part of the conductive housing member and which supports a band for satellite communication; a second antenna structure which is disposed in the housing and which can be connected to the first antenna structure; and a switch which is disposed on the printed circuit board and which selectively connects the second antenna structure to the first antenna structure. A first end of the switch is connected to the second antenna structure, and a second end of the switch can be connected to the ground.

## Description

### [Technical Field]

The disclosure relates to a method and device for providing a satellite communication service.

### [Background Art]

An electronic device may provide a communication service through a relay such as a base station. However, e.g., in a special circumstance such as a disaster circumstance, the relay may not properly perform its role. In this case, the electronic device is difficult to perform its role as a communication device.

In addition to such a disaster circumstance, in a mountain or marine circumstance outside the influence of the relay, in order for the electronic device to perform its original function as a communication device, discussions are underway to add a satellite communication function to a commonly used electronic device such as a smartphone. Meanwhile, in order for the electronic device to provide the satellite communication function, the electronic device needs an antenna supporting a frequency band for satellite communication (e.g., a 1.6 GHz band).

### [Disclosure of Invention]

### [Solution to Problems]

According to an embodiment of the disclosure, an electronic device may include a housing including a conductive housing member. The electronic device may comprise a printed circuit board disposed in the housing. The electronic device may include a first antenna structure formed by a portion of the conductive housing member and configured to support a frequency band for satellite communication. The electronic device may include a second antenna structure disposed within the housing and configured to be connectable to the first antenna structure. The electronic device may include a switch disposed on the printed circuit board and configured to selectively connect the second antenna structure to the first antenna structure. A first end of the switch is connected to the second antenna structure, and a second end of the switch may be connected to a ground.

According to an embodiment of the disclosure, a method of operating an electronic device may include at least one operation. The at least one operation may include an operation of identifying whether a communication mode is a satellite communication mode. The at least one operation may include an operation of, based on identifying that the communication mode is the satellite communication mode, configuring a switch to a first state such that a second antenna structure is connected to a first antenna structure, and providing a first communication service through an antenna including the second antenna structure and the first antenna structure to which the second antenna structure is connected. The at least one operation may include an operation of, based on identifying that the communication mode is not the satellite communication mode, configuring the switch to a second state such that the second antenna structure is not connected to the first antenna structure, and providing a second communication service through an antenna including the first antenna structure to which the second antenna structure is not connected. The first antenna structure may be formed by a portion of a conductive housing member included in a housing and may be configured to support a frequency band for satellite communication. The switch may be disposed on a printed circuit board within the housing, a first end of the switch may be connected to the second antenna structure, and a second end of the switch may be connected to a ground.

According to an embodiment, a storage medium storing at least one computer-readable instruction may be provided. The at least one instruction, when executed by at least some of the at least one processor of an electronic device, may enable the electronic device to perform at least one operation. The at least one operation may include an operation of identifying whether a communication mode is a satellite communication mode. The at least one operation may include an operation of, based on identifying that the communication mode is the satellite communication mode, configuring a switch to a first state such that a second antenna structure is connected to a first antenna structure, and providing a first communication service through an antenna including the second antenna structure and the first antenna structure to which the second antenna structure is connected. The at least one operation may include an operation of, based on identifying that the communication mode is not the satellite communication mode, configuring the switch to a second state such that the second antenna structure is not connected to the first antenna structure, and providing a second communication service through an antenna including the first antenna structure to which the second antenna structure is not connected. The first antenna structure may be formed by a portion of a conductive housing member included in a housing and may be configured to support a frequency band for satellite communication. The switch may be disposed on a printed circuit board within the housing, a first end of the switch may be connected to the second antenna structure, and a second end of the switch may be connected to a ground.

### [Brief Description of Drawings]

FIG. 1 is a block diagram illustrating an electronic device in a network environment according to various embodiments of the disclosure.
FIG. 2 is a wireless communication module including a transceiver connected to an antenna according to an embodiment of the disclosure.
FIG. 3A is a front perspective view illustrating an electronic device according to an embodiment of the disclosure.
FIG. 3B is a rear perspective view illustrating an electronic device according to an embodiment of the disclosure.
FIG. 4 is an exploded perspective view illustrating an electronic device according to an embodiment of the disclosure.
FIG. 5 is a perspective view illustrating an electronic device including an antenna structure according to an embodiment of the disclosure.
FIG. 6 illustrates an example of a wireless communication module for supporting satellite communication according to an embodiment of the disclosure.
FIG. 7 is a view illustrating a polarization characteristic of an RF signal radiated by an electronic device including the wireless communication module of FIG. 6.
FIGS. 8A and 8B illustrate perspective views illustrating an electronic device including an additional antenna structure according to an embodiment of the disclosure.
FIG. 9 illustrates an example of an antenna including an additional antenna structure according to an embodiment of the disclosure.
FIG. 10 is a view illustrating a polarization characteristic of an RF signal radiated by an electronic device including the wireless communication module of FIG. 9.
FIGS. 11A and 11B illustrate an example of a wireless communication module for supporting satellite communication according to an embodiment of the disclosure.
FIG. 12 illustrates examples of an additional antenna structure according to an embodiment of the disclosure.
FIG. 13 is a view illustrating passive gain of an antenna not including an additional antenna structure according to an embodiment of the disclosure.
FIG. 14 is a view illustrating axis ratio (AR) performance for an antenna not including an additional antenna structure according to an embodiment of the disclosure.
FIG. 15 is a view illustrating passive gain of an antenna in which an additional antenna structure is configurable according to an embodiment of the disclosure.
FIG. 16 is a view illustrating AR performance for an antenna in which an additional antenna structure is configurable according to an embodiment of the disclosure.
FIG. 17 is a view illustrating passive gain of an antenna in which an additional antenna structure is configurable according to an embodiment of the disclosure.
FIG. 18 is a view illustrating AR performance for an antenna in which an additional antenna structure is configurable according to an embodiment of the disclosure.
FIG. 19 illustrates a method of operating an electronic device according to an embodiment of the disclosure.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

The disclosure discloses an antenna or antenna structure for implementing circular polarization and enhancing AR performance, which is a measurement metric thereof, to enhance performance of satellite communication in an electronic device using a conductive housing member such as a metal frame as an antenna.

The disclosure discloses an antenna or antenna structure capable of selectively providing a communication service (e.g., a global positioning system (GPS) service) provided by a basic antenna and a satellite communication service, using a basic antenna structure (e.g., a GPS antenna) supporting a frequency band for satellite communication included in an electronic device and selectively connecting an additional antenna structure such as a parasitic element to the corresponding basic antenna structure through a switch element. The shape and position of such an additional antenna structure may be set to have an optimal shape and position for enhancing satellite communication performance (e.g., circular polarization performance and/or AR performance). Accordingly, a satellite communication service having high quality may be provided even in a commonly used electronic device such as a smartphone.

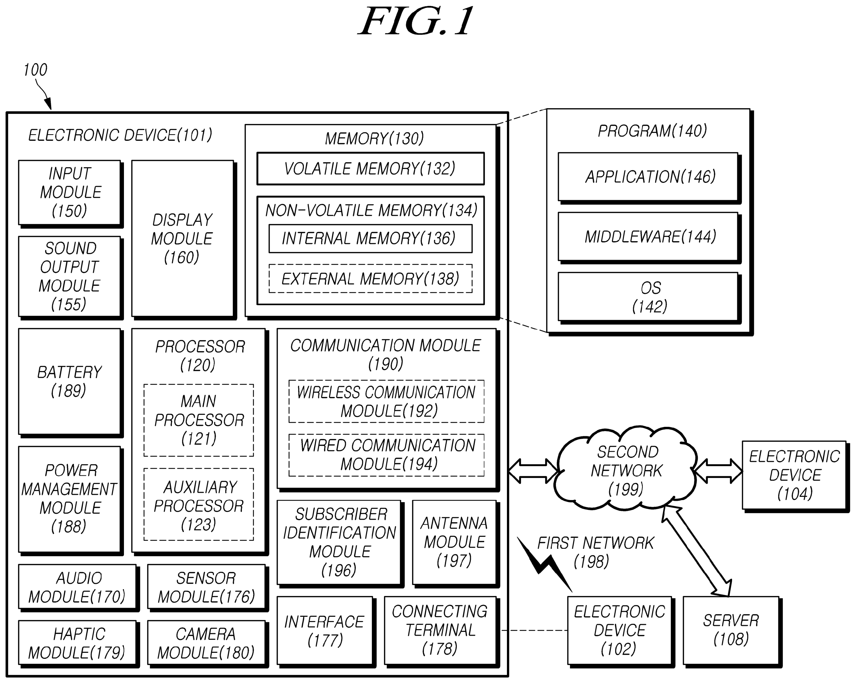

FIG. 1 is a block diagram illustrating an electronic device in a network environment, according to various embodiments of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, in case that the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mm Wave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

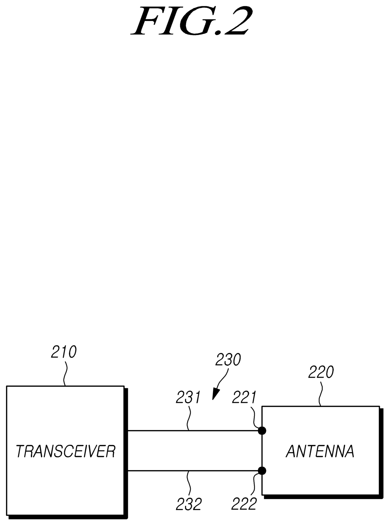

FIG. 2 is a wireless communication module including a transceiver connected to an antenna according to an embodiment of the disclosure.

Referring to FIG. 2, an electronic device (e.g., the electronic device 101 of FIG. 1) may include a wireless communication module 192 (e.g., the wireless communication module 192 of FIG. 1).

According to an embodiment, the wireless communication module may include at least one transceiver (e.g., a transceiver 210) connected to at least one antenna 220 (e.g., the antenna module 197 of FIG. 1). In the disclosure, the transceiver may be referred to as an RF transceiver.

According to an embodiment, the at least one transceiver 210 may be used to handle various RF communication bands. For example, the at least one transceiver 210 may include a transceiver circuit for handling a 2.4 GHz band and/or a 5 GHz band for Wi-Fi communication, a transceiver circuit for handling a 2.4 GHz band for Bluetooth communication, a transceiver circuit for handling bands for supporting cellular communication (e.g., a below 6 GHz band (e.g., frequency range (FR) 1), an above 6 GHz band (e.g., FR2)), a transceiver circuit for handling a band for supporting satellite communication such as GPS communication (e.g., a 1575 MHz band or 1602 MHz), and/or a transceiver circuit for handling a band(s) for other short-range communication or long-range communication.

According to an embodiment, the at least one antenna 220 may have an antenna structure for supporting any communication band of interest. For example, the at least one antenna 220 may include an antenna structure for supporting a 2.4 GHz band and/or a 5 GHz band for Wi-Fi communication, an antenna structure for supporting a 2.4 GHz band for Bluetooth communication, an antenna structure for supporting bands for supporting cellular communication (e.g., a below 6 GHz band (e.g., FR1), an above 6 GHz band (e.g., FR2)), an antenna structure for handling a band for supporting satellite communication such as GPS communication (e.g., a 1575 MHz band or 1602 MHz), and/or an antenna structure for supporting a band(s) for other short-range communication or long-range communication. In the disclosure, the terms antenna and antenna structure are interchangeable.

According to an embodiment, the antenna 220 may be any suitable type of antenna. For example, the antenna 220 may be an antenna having a structure of a loop antenna structure, a patch antenna structure, an inverted-F antenna structure, a slot antenna structure, a helical antenna structure, a strip antenna structure, a monopole antenna structure, a dipole antenna structure, or a combination thereof.

According to an embodiment, the antenna 220 may be located at any suitable position of an electronic device (e.g., the electronic device 101 of FIG. 1). For example, the antenna 220 may be located along an edge of the electronic device, may be located on a printed circuit board within the electronic device, and/or may be located on a dielectric support structure such as a plastic, glass, or ceramic member.

According to an embodiment, the antenna 220 may include a feed terminal 221 and/or a ground terminal 222. As illustrated in FIG. 2, the transceiver 210 may be connected to the at least one antenna 220 using a transmission line (e.g., an antenna transmission line 230). The transmission line 230 may include a first transmission line 231 corresponding to a signal path and a second transmission line 232 corresponding to a ground path.

According to an embodiment, the first transmission line 231 (or the signal path) and the second transmission line 232 (or the ground path) may be formed on a printed circuit board within the electronic device, may be formed on a dielectric support structure such as a plastic, glass, or ceramic member, and/or may be formed as a portion of a cable.

According to an embodiment, the first transmission line 231 may be connected to the feed terminal 221 of the antenna 220. The electronic device may feed the corresponding antenna 220 through the first transmission line 231. According to an embodiment, the second transmission line 232 may be connected to the ground terminal 222 of the antenna 220. The electronic device may ground the corresponding antenna 220 through the second transmission line 232.

According to an embodiment, the wireless communication module 192 may further include at least one electrical component. The at least one electrical component may include, e.g., one or more integrated circuits, a power amplifier (PA), a low-noise amplifier (LNA), a switch, a filter, passive RF elements, a multiplexer, and other circuits handling an RF wireless signal. As an example, a matching circuit or an RFFE circuit may be disposed on a transmission path (e.g., a signal path corresponding to the first transmission line 231 or a ground signal path corresponding to the second transmission line 232).

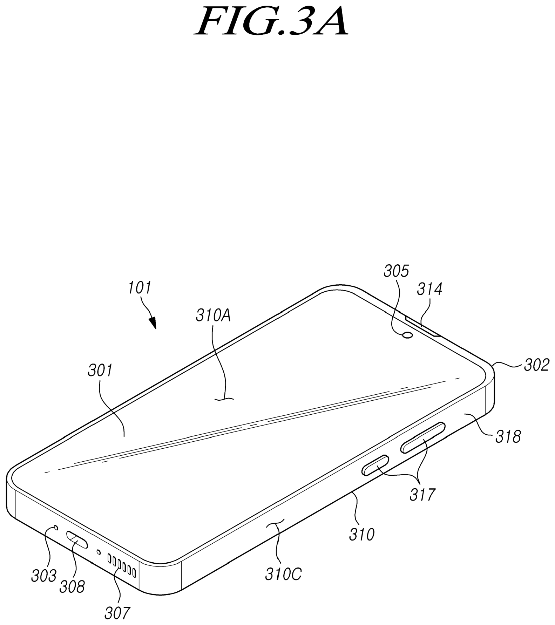

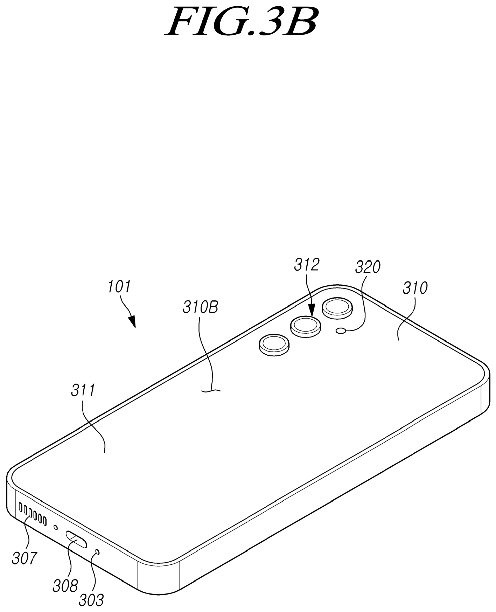

FIG. 3A is a front perspective view illustrating an electronic device according to an embodiment of the disclosure. FIG. 3B is a rear perspective view illustrating an electronic device according to an embodiment of the disclosure.

Referring to FIGS. 3A and 3B, an electronic device 101 according to an embodiment may include a housing 310. According to an embodiment, a housing 310 may have a structure including a front surface 310A, a rear surface 310B, and a side surface 310C surrounding a space between the front surface 310A and the rear surface 310B. According to an embodiment, the housing 310 may have a structure forming portion of the front surface 310A of FIG. 3A, the rear surface 310B, and the side surfaces 310C of FIG. 3B.

According to an embodiment, at least portion of the front surface 310A may have a substantially transparent front plate 302 (e.g., a glass plate or polymer plate including various coat layers).

According to an embodiment, the rear surface 310B may be formed by a rear plate 311. The rear plate 311 may be formed of, e.g., glass, ceramic, polymer, metal (e.g., aluminum, stainless steel (STS), titanium, or magnesium), or a combination of at least two thereof.

According to an embodiment, the side surface 310C may be formed by a side bezel structure (or a "side member") 318 that couples to the front plate 302 and/or the rear plate 311 and includes a metal and/or polymer. According to an embodiment, the rear plate 311 and the side bezel structure 318 may be integrally formed together and include the same material (e.g., glass, metal, such as aluminum, STS, or titanium, or ceramic).

According to an embodiment, the electronic device 101 may include at least one of a display 301, audio modules 303, 307, and 314 (e.g., the audio module 170 of FIG. 1), a sensor module (e.g., the sensor module of FIG. 1). 176), camera modules 305 and 312 (e.g., the camera module 180 of FIG. 1), a key input device 317 (e.g., the input module 150 of FIG. 1), and a connector hole 308 (e.g., the connecting terminal 178 of FIG. 1). In some embodiments, the electronic device 101 may exclude at least one of the components or may add another component.

According to an embodiment, the display 301 may be visually revealed through, e.g., at least a portion of the front plate 302. For example, at least a portion of the display 301 may be exposed through the front plate 302 forming the front surface 310A. For example, the edge of the display 301 may be formed to be substantially the same as the adjacent outer-edge shape of the front plate 302. For example, the interval between the outer edge of the display 301 and the outer edge of the front plate 302 may remain substantially even to give a larger area of exposure the display 301.

According to an embodiment, the surface (or the front plate 302) of the housing 310 may include a screen display area formed as the display 301 is visually exposed. For example, the screen display area may include the front surface 310A.

According to an embodiment, the electronic device 101 may include a recess or opening formed in a portion of the screen display area (e.g., the front surface 310A) of the display 301 and may include at least one of an audio module 314, a sensor module, a light emitting device, and a camera module 305 aligned with the recess or opening.

According to an embodiment, the electronic device 101 may include at least one or more of the audio module 314, sensor module 204, camera module 305, fingerprint sensor, and light emitting device on the rear surface of the screen display area of the display 301.

According to an embodiment, the display 301 may be coupled with or disposed adjacent to a touch detection circuit, a pressure sensor capable of measuring the strength (pressure) of touches, and/or a digitizer for detecting a magnetic field-type stylus pen.

According to an embodiment, the first camera module 305 among the camera modules 305 and 312 and/or the sensor module may be disposed , in the internal space of the electronic device 101, to abut the external environment through the transmissive area of the display 301. According to an embodiment, the area facing the first camera module 305 of the display 301 may be formed as a transmissive area having a designated transmittance, as a portion of the area displaying content. According to an embodiment, the transmissive area may be formed to have a transmittance in a range from about 5% to about 20%. The transmissive area may include an area overlapping an effective area (e.g., an angle-of-view area) of the first camera module 305 through which light incident on the image sensor to generate an image passes. For example, the transmissive area of the display 301 may include an area having a lower pixel density and/or wiring density than the surrounding area. For example, the transmissive area may replace a recess or opening.

According to an embodiment, the audio modules 303, 307, and 314 may include, e.g., a microphone hole 303 and speaker holes 307 and 314. A microphone 303 for obtaining an external sound may be disposed inside the microphone hole. According to an embodiment, a plurality of microphones may be disposed to detect the direction of sound. The speaker holes 307 and 314 may include an external speaker hole 307 and a phone receiver hole 314. In an embodiment, the speaker holes 307 and 314 and the microphone hole 303 may be implemented as a single hole, or speakers may be included without the speaker holes 307 and 314 (e.g., piezo speakers). The audio modules 303, 307, and 314 are not limited to the above-described structure. Depending on the structure of the electronic device 101, various design changes may be made--e.g., only some of the audio modules may be mounted, or a new audio module may be added.

According to an embodiment, for example, the sensor module may generate an electrical signal or data value corresponding to an internal operating state or external environmental state of the electronic device 101. The sensor modules may include a first sensor module (e.g., a proximity sensor) and/or a second sensor module (e.g., a fingerprint sensor) disposed on the front surface 310A of the housing 310 and/or a third sensor module (e.g., an HRM sensor) and/or a fourth sensor module (e.g., a fingerprint sensor) disposed on the rear surface 310B of the housing 310. According to an embodiment, the fingerprint sensor may be disposed on the rear surface 310B as well as on the front surface 310A (e.g., the display 301) of the housing 310. The electronic device 101 may further include at least one of a sensor module not illustrated, e.g., a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor. The sensor modules are not limited to the above-described structure. Depending on the structure of the electronic device 101, various design changes may be made-e.g., only some of the sensor modules may be mounted, or a new sensor module may be added.

According to an embodiment, the camera modules 305 and 312 may include a first camera module 305 disposed on the front surface 310A of the electronic device 101, and a rear camera device 312 and/or a flash 319 disposed on the rear surface 310B. The camera modules 305 and 312 may include one or more lenses, an image sensor, and/or an image signal processor. The flash 319 may include, e.g., a light emitting diode or a xenon lamp. According to an embodiment, two or more lenses (an infrared (IR) camera, a wide-angle lens, and a telescopic lens) and image sensors may be disposed on one surface of the electronic device 101. The camera modules 305 and 312 are not limited to the above-described structure. Depending on the structure of the electronic device 101, various design changes may be made--e.g., only some of the camera modules may be mounted, or a new camera module may be added.

According to an embodiment, the electronic device 101 may include a plurality of camera modules (e.g., a dual camera or triple camera) having different attributes (e.g., angle of view) or functions. For example, a plurality of camera modules 305 and 312 including lenses having different angles of view may be configured, and the electronic device 101 may control to change the angle of view of the camera modules 305 and 312 performed by the electronic device 101 based on the user's selection. At least one of the camera modules 305 and 312 may form, for example, a wide-angle camera and at least another of the plurality of camera modules may form a telephoto camera. Similarly, at least one of the camera modules 305 and 312 may form, for example, a front camera and at least another of the plurality of camera modules may form a rear camera. Further, the camera modules 305 and 312 may include at least one of a wide-angle camera, a telephoto camera, and an infrared (IR) camera (e.g., a time of flight (TOF) camera, a structured light camera). According to an embodiment, the IR camera may be operated as at least a portion of the sensor module. For example, the TOF camera may be operated as at least a portion of a sensor module for detecting a distance to a subject.

According to an embodiment, the key input device 317 may be disposed on the side surface 310C of the housing 310. In an embodiment, the electronic device 101 may exclude all or some of the above-mentioned key input devices 317 and the excluded key input devices 317 may be implemented in other forms, e.g., as soft keys, on the display 301. According to an embodiment, the key input device may include the sensor module 316 disposed on the second surface 310B of the housing 310.

According to an embodiment, the light emitting device may be disposed on, e.g., the front surface 310A of the housing 310. The light emitting element may provide state information of the electronic device 101 in the form of light, for example. In an embodiment, the light emitting device may provide a light source that interacts with, e.g., the front camera module 305. The light emitting element may include, e.g., an light emitting device (LED), an IR LED, and/or a xenon lamp.

According to an embodiment, the connector hole 308 may receive a connector (e.g., a universal serial bus (USB) connector) for transmitting and receiving power and/or data with an external electronic device.

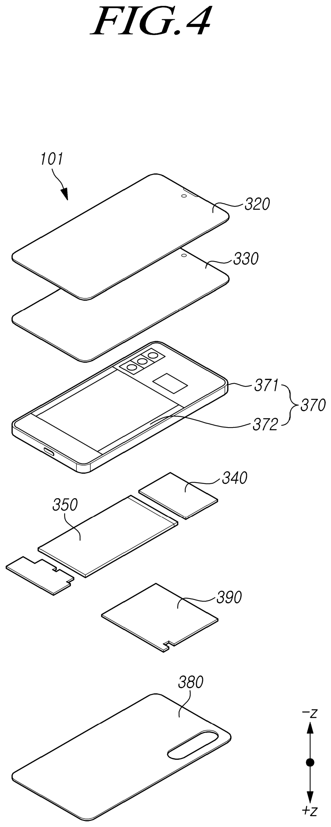

According to an embodiment, the first camera module 305 of the camera modules 305 and 312 and/or some of the sensor modules may be disposed to be exposed to the outside through at least a portion of the display 301. For example, the camera module 305 may include a punch hole camera disposed inside a hole or recess formed in the rear surface of the display 301. According to an embodiment, the second camera module 312 may be disposed inside the housing 310 so that the lens is exposed to the second surface 310B of the electronic device 101. For example, the second camera module 312 may be disposed on a printed circuit board (e.g., the printed circuit board 340 of FIG. 4).

According to an embodiment, the first camera module 305 and/or the sensor module may be disposed to contact the external environment through a transparent area from the internal space of the electronic device 101 to the front plate 302 of the display 301. Further, some sensor module may be disposed to perform its functions without being visually exposed through the front plate 302 in the internal space of the electronic device.

FIG. 4 is an exploded perspective view illustrating an electronic device according to an embodiment of the disclosure.

Referring to FIG. 4, an electronic device 101 (e.g., the electronic device 101 of FIG. 1 to FIG. 3A/B) may include a supporting bracket 370, a front plate 320 (e.g., the front plate 302 of FIG. 3A), a display 330 (e.g., the display 301 of FIG. 3A), a printed circuit board 340 (e.g., a PCB, flexible PCB (FPCB), or rigid flexible PCB (RFPCB)), a battery 350 (e.g., the battery 189 in FIG. 1), a supporting plate 390 including an antenna (e.g., the antenna module 197 of FIG. 1 and/or the antenna 220 of FIG. 2), and/or a rear plate 380 (e.g., the rear plate 311 of FIG. 2). The supporting bracket 370 of the electronic device 101 according to an embodiment may include a side bezel structure 371 (e.g., the side bezel structure 318 of FIG. 2) and a first supporting member 372. In the disclosure, the supporting plate 390 may be referred to as an antenna plate.

According to an embodiment, the electronic device 101 may omit at least one of the components or may add another component. At least one of the components of the electronic device 101 may be the same or similar to at least one of the components of the electronic device 101 of FIG. 2 or 3A/B and no duplicate description is made below.

According to an embodiment, the first supporting member 372 may be disposed inside the electronic device 101 to be connected with the side bezel structure 318 or integrated with the side bezel structure 318. The first supporting member 372 may be formed of, e.g., a metal and/or non-metallic material (e.g., polymer). The display 330 may be joined onto one surface of the first supporting member 372, and the printed circuit board 340 may be joined onto the opposite surface of the first supporting member 311.

According to an embodiment, a processor (e.g., the processor 120 of FIG. 1), a memory (e.g., the memory 130 of FIG. 1), and/or an interface (e.g., the interface 177 of FIG. 1) may be mounted on the printed circuit board 340. In the disclosure, the plane containing the printed circuit board 340 may be referred to as a conductive plane or a ground plane.

According to an embodiment, the processor may include one or more of, e.g., a central processing unit, an application processor, a graphic processing device, an image signal processing, a sensor hub processor, or a communication processor.

According to an embodiment, the printed circuit board 340 may include a flexible printed circuit board type radio frequency cable (FRC). For example, the printed circuit board 340 may be disposed on at least a portion of the first supporting member 372 and may be electrically connected with an antenna module (e.g., the antenna module 197 of FIG. 1 and/or the antenna 200 of FIG. 2) and a communication module (e.g., the communication module 190 of FIG. 1 and/or the transceiver 210 of FIG. 2).

According to an embodiment, the memory may include, e.g., a volatile memory or a non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect the electronic device 101 to an external electronic device, e.g., and may include a USB connector, an SD card/MMC connector, or an audio connector.

According to an embodiment, the battery 350 may be a device for supplying power to at least one component of the electronic device 101, and may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally disposed inside the electronic device 101 or may be detachably disposed with the electronic device 101.

According to an embodiment, the antenna plate 390 may be disposed between the rear plate 380 and the printed circuit board 340 (and/or the battery 350). The antenna plate 390 may include, e.g., a near-field communication (NFC) antenna, a wireless charging antenna, and/or a magnetic secure transmission (MST) antenna. At least one antenna included in the antenna plate 390 may perform short-range communication with, e.g., an external device or may wirelessly transmit or receive power necessary for charging. Meanwhile, as described above, the antenna or the antenna structure may be positioned at any other suitable position. For example, one or more antennas may be positioned in a first area (e.g., an upper area) of the electronic device, and one or more antennas may be positioned in a second area (e.g., a lower area) spaced apart from the first area of the device. For example, one or more antennas may be positioned along an edge (e.g., the side member or the side bezel structure 318) of the electronic device. For example, one or more antennas 220 may be positioned in the center of the rear plate 380 or may be positioned at a corner of the electronic device.

According to an embodiment, the rear plate 380 may form at least a portion of the rear surface (e.g., the second surface 310B of FIG. 3) of the electronic device 101.

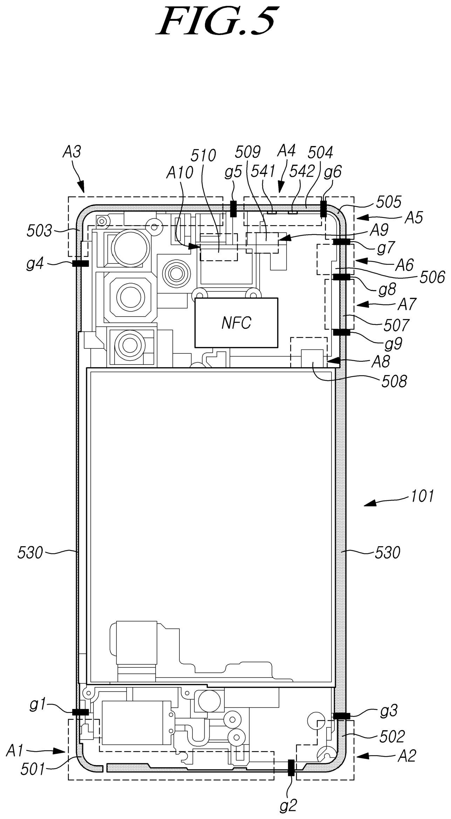

FIG. 5 is a perspective view illustrating an electronic device including an antenna structure according to an embodiment of the disclosure.

Referring to FIG. 5, an electronic device 101 (e.g., the electronic device 101 of FIGS. 1, 3A/B to 4) may include a housing 310 (e.g., the housing 310 of FIG. 3A/B) and/or at least one antenna (e.g., the antenna 220 of FIG. 2). In the disclosure, the housing may also be referred to as a case or a frame.

According to an embodiment, the housing 310 may include a structure forming a rear surface (e.g., the rear surface 310B of FIG. 3B) (hereinafter, a rear housing structure) and/or a structure forming a side surface (e.g., the side surface 310C of FIG. 3B) (hereinafter, a side housing structure). The side housing structure (or bezel), e.g., may be formed as an extending portion of the rear housing structure, or may be formed of one or more separated members. According to an embodiment, the side housing structure may include a side member 372.

According to an embodiment, the housing 310 may include a conductive member including a conductive material (e.g., STS, metal, titanium, or other conductive material). For example, the side member of the housing 310 (e.g., the side member 372) may include a conductive member 530. According to an embodiment, the conductive member may be a metal frame. In the disclosure, the conductive member may also be referred to as a conductive housing member. In the disclosure, the side member including the conductive member may be referred to as a conductive side member. In the disclosure, the frame of the electronic device 101 composed of a conductive housing member including metal may be referred to as a metal frame.

According to an embodiment, the conductive housing member 530 (or the side member) forming a side surface of the electronic device 101 may have a vertical structure, a curved structure, or another shape.

According to an embodiment, the at least one antenna (e.g., the antenna 220 of FIG. 2) may include one or more antennas including an antenna structure formed by at least a portion of the conductive housing member 530 (or the conductive side member) of the electronic device 101, and/or one or more antennas including a conductive antenna structure formed on a plate (e.g., the antenna plate 390 and/or the rear plate 380 of FIG. 4) on a plane parallel to a front surface or a rear surface of the electronic device 101.

According to an embodiment, the conductive housing member 530 (or the conductive side member) may be divided into a plurality of segments (or conductive portions) by at least one gap (or a non-conductive portion). According to an embodiment, the gap may be filled with a dielectric. The dielectric may be, e.g., air, plastic, ceramic, glass, or other dielectric.

According to an embodiment, the shapes of the segments of the conductive housing member 530 (or the conductive side member) may be selected to form an antenna having a required antenna performance characteristic. As an example, the segment of the conductive housing member 530 for satellite communication (e.g., GPS) may be formed to have a shape that has an antenna performance characteristic (e.g., a circular polarization performance characteristic) required for satellite communication.

According to an embodiment, one or more antennas may be used during wireless communication. As an example, a single-band antenna and a multi-band antenna may be used. For example, the single-band antenna may be used to handle local area network communication at, e.g., 2.4 GHz. For example, the multi-band antenna may be used to handle cellular telephone communication in a cellular communication band. For example, the single-band antenna may be used to transmit/receive a satellite communication signal (e.g., a GPS signal) in a band for satellite communication. Other types of communication links may be supported using single-band and multi-band antennas.

According to an embodiment, the at least one antenna may include at least one of a first antenna 501 to a tenth antenna 510.

According to an embodiment, at least one of the first antenna 501 to the tenth antenna 510 may be an antenna having a structure of a loop antenna structure, a patch antenna structure, an inverted-F antenna structure, a slot antenna structure, a helical antenna structure, a strip antenna structure, a monopole antenna structure, a dipole antenna structure, or a combination thereof.

According to an embodiment, some of the at least one antenna may be located in an upper region of the electronic device 101, and other some of the at least one antenna may be located in a lower region of the electronic device 101. For example, the first antenna 501 to the second antenna 502 may be located in the upper region of the electronic device 101, and the third antenna 503 to the tenth antenna 510 may be located in the upper region of the electronic device 101.

According to an embodiment, the first antenna 501 may have an antenna structure formed by a portion of the conductive housing member 530 included in a first region A1 (e.g., a first segment (or a first conductive portion) of the conductive housing member 530 extending between or disposed between a first gap g1 and a second gap g2). The first antenna 501 may be, e.g., a first main antenna supporting a high band (HB) and/or a low band (LB). The first antenna 501 may provide, e.g., a first cellular communication service (e.g., a 5G communication service).

According to an embodiment, the second antenna 502 may have an antenna structure formed by a portion of the conductive housing member 530 included in a second region A2 (e.g., a second segment (or a second conductive portion) of the conductive housing member 530 extending between or disposed between the second gap g2 and a third gap g3). The second antenna 502 may be, e.g., a second main antenna supporting a high band, an n77 band, and/or an n79 band. The second antenna 502 may provide, e.g., a second cellular communication service (e.g., an LTE communication service).

According to an embodiment, the third antenna 503 to the seventh antenna 507 may each have an antenna structure (e.g., a metal frame antenna structure) formed by a portion of the conductive housing member 530 included in a third region A3 to a seventh region A7, respectively. The third antenna 503 may have, e.g., an antenna structure formed by a portion of the conductive housing member 530 included in the third region A3 (e.g., a third segment (or a third conductive portion) of the conductive housing member 530 extending between or disposed between a fourth gap g4 and a fifth gap g5), and may be a first sub antenna supporting LB, a mid band (MB), and/or HB. The fourth antenna 504 may have, e.g., an antenna structure formed by a portion of the conductive housing member 530 included in the fourth region A4 (e.g., a fourth segment (or a fourth conductive portion) of the conductive housing member 530 extending between or disposed between the fifth gap g5 and a sixth gap g6), and may be a second sub antenna (e.g., a GPS antenna) supporting a frequency band for a satellite communication service (e.g., a GPS service), an MB band, and an HB band. The fifth antenna 505 may have, e.g., an antenna structure formed by a portion of the conductive housing member 530 included in the fifth region A5 (e.g., a fifth segment (or a fifth conductive portion) of the conductive housing member 530 extending between or disposed between the sixth gap g6 and a seventh gap g7), and may be a third sub antenna supporting an n77 band and/or an n79 band. The sixth antenna 606 may have, e.g., an antenna structure formed by a portion of the conductive housing member 530 included in the sixth region A6 (e.g., a sixth segment (or a sixth conductive portion) of the conductive housing member 530 extending between or disposed between the seventh gap g7 and an eighth gap g8), and may be a fourth sub antenna supporting a Wi-Fi service in a 5 GHz band. The seventh antenna 707 may have, e.g., an antenna structure formed by a portion of the conductive housing member 530 included in the seventh region A7 (e.g., a seventh segment (or a seventh conductive portion) of the conductive housing member 530 extending between or disposed between the eighth gap g8 and a ninth gap g9), and may be a fifth sub antenna (e.g., a Wi-Fi antenna) supporting a Wi-Fi service in a 2.4 GHz band, MB, HB, and/or an n77 band.

According to an embodiment, the electronic device 101 may bridge a gap or segments of the conductive housing member to support various frequency bands. For example, the electronic device 101 may bridge the fifth gap g5 and/or the sixth gap g6. Accordingly, an antenna including antenna structures formed by a fourth segment of the fourth antenna 504 and a fifth segment of the fifth antenna 505 together and/or an antenna including antenna structures formed by a sixth segment of the sixth antenna 506 and a seventh segment of the seventh antenna 507 together may be provided.

According to an embodiment, the eighth antenna 508 to the tenth antenna 510 may each be an antenna (e.g., a laser direct structuring (LDS) antenna) included in an eighth region A8 to a tenth region A10, respectively. The eighth antenna 508 may be included in the eighth region A8 and may be, e.g., a sixth sub antenna supporting an n79 band. The ninth antenna 509 may be included in the ninth region A9 and may be, e.g., a seventh sub antenna supporting an n77 band. The tenth antenna 510 may be included in the tenth region A10 and may be, e.g., an eighth sub antenna supporting an n79 band.

According to an embodiment, the eighth antenna 508 to the tenth antenna 510 may include an antenna structure formed on, e.g., a supporting member (e.g., the first supporting member 372 of FIG. 4), an antenna plate (e.g., the antenna plate 390 of FIG. 4), a printed circuit board (e.g., the printed circuit board 340 of FIG. 4), or a rear plate (e.g., the rear plate 380 of FIG. 4).

According to an embodiment, each antenna or antenna structure may include a feed terminal and/or a ground terminal, as illustrated in FIG. 2. For example, the antenna structure of the fourth antenna 504 may include a feed terminal 541 and a ground terminal 542. According to an embodiment, the feed terminal 541 may be connected to a signal path on a printed circuit board (e.g., the printed circuit board 340 of FIG. 4) (or a ground plane), and the ground terminal 542 may be connected to a ground path on the printed circuit board (e.g., the printed circuit board 340 of FIG. 4) (or the ground plane). The signal path may be connected to, e.g., a transceiver (e.g., the transceiver 210 of FIG. 2).

According to an embodiment, the electronic device 101 may include at least one electrical component on a feed path and/or a ground path. The at least one electrical component may include, e.g., one or more integrated circuits, a power amplifier (PA), a low-noise amplifier (LNA), a switch, a filter, passive RF elements, a multiplexer, and other circuits handling an RF wireless signal.

It is apparent to those of ordinary skill in the art to which the disclosure pertains that the antenna structure and the electronic device including the same according to various embodiments of the disclosure described above are not limited by the above-described embodiments and drawings, and various substitutions, modifications, and changes are possible within the technical scope of the disclosure.

Hereinafter, various embodiments for providing a satellite communication service using an antenna (e.g., the fourth antenna 504 of FIG. 5 (e.g., a GPS antenna)) supporting a band for satellite communication (e.g., 1616 MHz to 1626.5 MHz) is described. Meanwhile, hereinafter, for convenience of description, various embodiments of the disclosure is described using the fourth antenna 504 of FIG. 5 as an example of a basic antenna (or a basic antenna structure) for a satellite communication service, but the disclosure is not limited thereto. Any one or another antenna or a combination thereof among the remaining antennas of FIG. 5 may support a satellite communication band (e.g., 1616 MHz to 1626.5 MHz), and in this case, the corresponding antenna or antenna combination may also be applied as the basic antenna (or the basic antenna structure) in the embodiments of the disclosure.

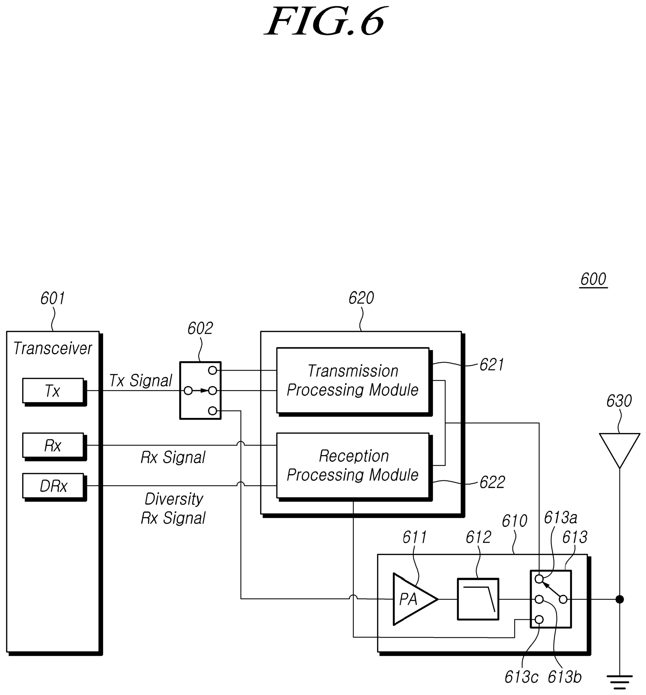

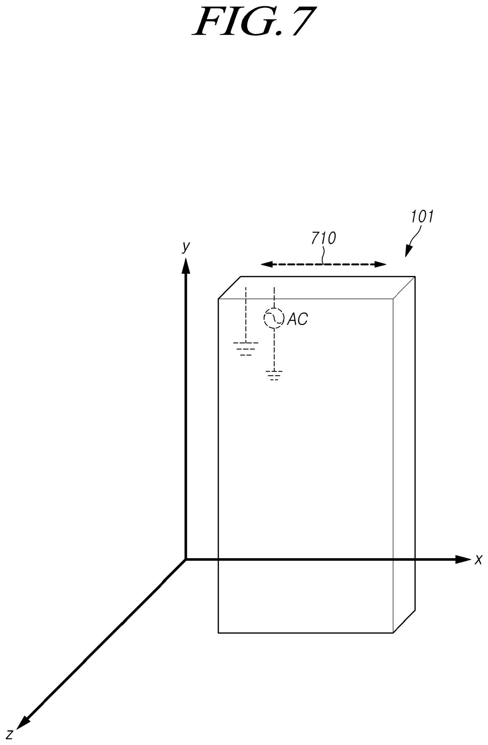

FIG. 6 illustrates an example of a wireless communication module for supporting satellite communication according to an embodiment of the disclosure. FIG. 7 is a view illustrating a polarization characteristic of an RF signal radiated by an electronic device including the wireless communication module of FIG. 6.

Referring to FIG. 6, a wireless communication module 600 (e.g., the wireless communication module 192 of FIG. 1 or FIG. 2) may include a transceiver 601 (e.g., the transceiver 210 of FIG. 2), a first module 610, a second module 620, and/or an antenna 630 (e.g., the antenna module 197 of FIG. 1, the antenna 220 of FIG. 2, or the fourth antenna 504 of FIG. 5).

According to an embodiment, the transceiver 601 may be connected to a processor (e.g., the processor 120 of FIG. 1). According to an embodiment, the transceiver 601 may convert, during transmission, a baseband signal generated by the processor into an RF signal (a Tx signal) of a required frequency band. According to an embodiment, the transceiver 601 may convert, during reception, a received RF signal (e.g., an Rx signal or a diversity Rx signal) into a baseband signal so that it may be processed by the processor. In the disclosure, the transceiver 601 may be referred to as an RF transceiver.

According to an embodiment, the transceiver 601, the first module 610, and/or the second module 620 may be disposed on a printed circuit board (e.g., the printed circuit board 340 of FIG. 4) of the electronic device 101.

According to an embodiment, a switch 602 may operate such that the transceiver 601 is connected to the first module 610 or the second module 620 (e.g., a transmission processing module 620 of the second module 620) according to a control signal of a processor (e.g., the processor 120 of FIG. 1).

According to an embodiment, the first module 610 may include a PA 611, a filter 612 (e.g., a low-pass filter), and/or a switch 613 (e.g., a 1P3T switch).

According to an embodiment, the switch 613 may be connected to a first contact 613a, a second contact 613b, or a third contact 613c according to a control signal of a processor (e.g., the processor 120 of FIG. 1).

For example, in case that a communication mode is a general call mode providing cellular communication, the switch 613 may be connected to the first contact 613a. Accordingly, an RF transmission path and an RF reception path of the general call mode may be supported. In the disclosure, the general call mode may be referred to as a general communication mode.

For example, in case that the communication mode is a satellite communication mode providing satellite communication, the switch 613 may be connected to the second contact 613b or the third contact 613c. For example, in the case of a transmission operation of the satellite communication mode, the switch 613 may be connected to the second contact 613b. Accordingly, an RF transmission path of the satellite communication mode may be supported. For example, in the case of a reception operation of the satellite communication mode, the switch 613 may be connected to the third contact 613c. Accordingly, an RF reception path of the satellite communication mode may be supported.

According to an embodiment, in case that the switch 613 is connected to the first contact 613a, the first module 610 may, during transmission, transfer an RF signal of a first frequency band (e.g., a frequency band for satellite communication) processed by the second module 620 to the antenna 630 without separate processing, and may, during reception, transfer an RF signal of the first frequency band (e.g., the frequency band for satellite communication) received through the antenna 630 to the second module 620 without separate processing. For example, the second module 620 may, during transmission, post-process an RF signal of the first frequency band (e.g., the frequency band for satellite communication) converted by the transceiver 601 and transmit it through the antenna 630, and may, during reception, pre-process an RF signal of the first frequency band (e.g., the frequency band for satellite communication) received through the antenna 630 and transfer it to the transceiver 601. Accordingly, a general communication service (e.g., a GPS service) may be provided.

According to an embodiment, in case that the switch 613 is connected to the second contact 613b, the first module 610 may post-process an RF signal of the first frequency band (e.g., the frequency band for satellite communication) converted by the transceiver 601 and transmit it through the antenna 630. As an example, the first module 610 may amplify the RF signal using the PA 611, filter the amplified RF signal, and transmit the filtered RF signal through the antenna 630. Accordingly, a satellite communication service may be provided.

According to an embodiment, in case that the switch 613 is connected to the third contact 613c, the first module 610 may transfer an RF signal of the first frequency band (e.g., the frequency band for satellite communication) received through the antenna 630 to the second module 620 without separate processing. In this case, the second module 620 may pre-process the transferred RF signal of the first frequency band (e.g., the frequency band for satellite communication) and transfer it to the transceiver 601. Accordingly, a satellite communication service (e.g., satellite telephony) may be provided.

According to an embodiment, the second module 620 may include a plurality of PAs, LNAs, filters, multiplexers, and/or switches to support a plurality of RF paths (e.g., an RF transmission path and/or an RF reception path). As an example, the second module 620 may include a transmission processing module 621 including a PA, a filter, and/or a switch for supporting the RF transmission path, and/or a reception processing module 622 including a switch, a filter, and/or an LNA for supporting the RF reception path.

According to an embodiment, the transmission processing module 621 may, during transmission, post-process an RF signal converted by the transceiver 601 and transmit it through the antenna 630. As an example, the transmission processing module 621 may amplify the RF signal using a PA, filter the amplified RF signal, and transmit the filtered RF signal through the antenna 630. According to an embodiment, the reception processing module 622 may, during reception, pre-process an RF signal received through the antenna 630 and transfer it to the transceiver 601. As an example, the reception processing module 622 may perform low-noise amplification processing on the received RF signal and transfer the processed RF signal to the transceiver 601 through a switch. In the disclosure, the first module 610 may be referred to as a first RFFE module, and the second module 620 may be referred to as a second RFFE module.

As described above, in case that the electronic device 101 uses an antenna (e.g., the fourth antenna 504 of FIG. 5 (e.g., a GPS antenna)) supporting a frequency band for satellite communication as the antenna 630, transmission/reception of an RF signal for satellite communication may be possible through the wireless communication module 600. However, in case that the corresponding antenna 630 is, e.g., an antenna (e.g., the fourth antenna 504 of FIG. 4) having an antenna structure formed by a portion of a conductive housing member (e.g., the conductive housing member 530 of FIG. 5) (or a conductive side member), it may be identified that, as illustrated in FIG. 7, the RF signal is radiated with linear polarization 710. In this case, performance of circular polarization for satellite communication is not high, and communication quality of satellite communication may be degraded. To address this, a method of newly adding a separate satellite antenna having high satellite communication performance to the electronic device may be considered. However, this method may not be efficient in terms of cost and space utilization of the electronic device 101. Therefore, it is necessary to consider a method of adding an additional antenna structure (e.g., a parasitic antenna structure or a parasitic element) for enhancing the quality of satellite communication while using an antenna structure (a basic antenna structure) already existing in the electronic device 101, such as the antenna structure of the fourth antenna 504 of FIG. 4 supporting a satellite communication band. The method of adding such an additional antenna structure may be advantageous in terms of cost and space utilization of the electronic device 101, compared to newly adding a completely new satellite antenna to the electronic device 101.

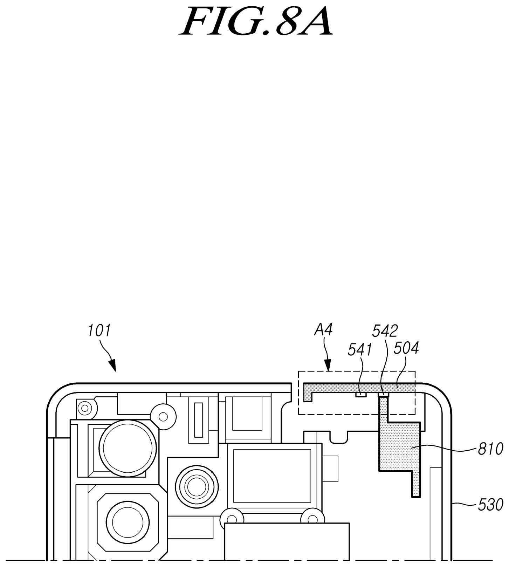

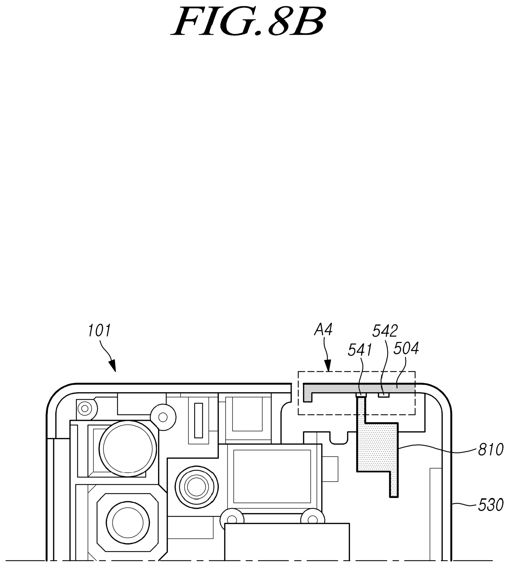

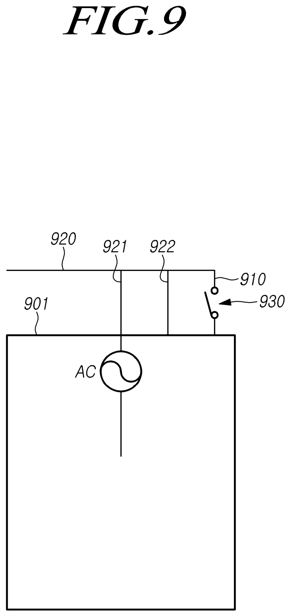

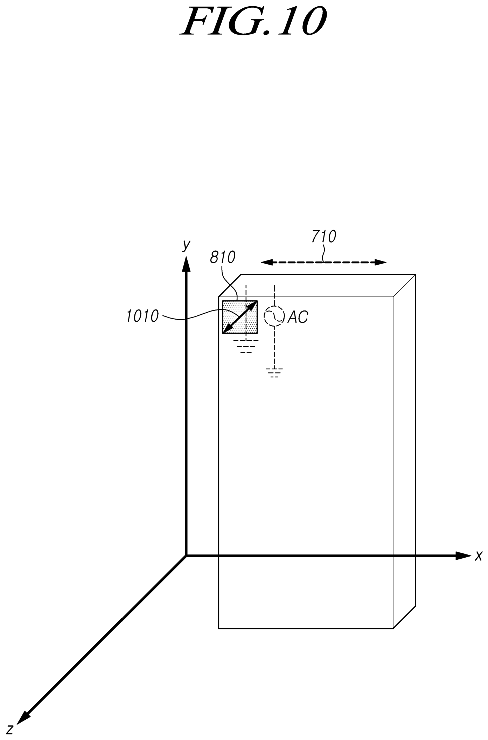

FIGS. 8A and 8B illustrate perspective views illustrating an electronic device including an additional antenna structure according to an embodiment of the disclosure. FIG. 9 illustrates an example of an antenna including an additional antenna structure according to an embodiment of the disclosure. FIG. 10 is a view illustrating a polarization characteristic of an RF signal radiated by an electronic device including the wireless communication module of FIG. 9.

The perspective views illustrating FIGS. 8A and 8B may be enlarged perspective views illustrating an upper region including the first antenna structure 504 (e.g., the fourth antenna 504 of FIG. 5) from the perspective view illustrating FIG. 5. As illustrated in FIG. 5, the fourth antenna 504 may have, e.g., an antenna structure formed by a portion of the conductive housing member 530 included in the fourth region A4 (e.g., a fourth segment of the conductive housing member 530 extending between the fifth gap g5 and the sixth gap g6), and may be a second sub antenna (e.g., a GPS antenna) supporting a frequency band for a satellite communication service (e.g., a GPS service), an MB band, and an HB band.

Referring to FIGS. 8A, 8B, and 9, the electronic device 101 may further include an additional antenna structure 810.

According to an embodiment, the additional antenna structure 810 may be connected to the first antenna structure 504. In the disclosure, the first antenna structure 504 may be referred to as a basic antenna structure. In the disclosure, the additional antenna structure 810 may be referred to as a second antenna structure.

As an example, as illustrated in FIG. 8A, the additional antenna structure 810 may be connected to the ground terminal 542 of the first antenna structure 504. For example, one end of the additional antenna structure 810 may be connected to the ground terminal 542 of the first antenna structure 504, and the other end of the additional antenna structure 810 may be connected to a switch 930 or a transmission line for connecting to the switch 930. As such, the additional antenna structure 810 may branch or extend from the ground terminal 542 of the first antenna structure 504. Due to the addition of such an additional antenna structure 810, a pattern, shape, or characteristic of an antenna including the first antenna structure 504 of FIG. 8A may be different from a pattern, shape, or characteristic of an antenna including the first antenna structure 504 of FIG. 5. As an example, due to the addition of the additional antenna structure 810, a frequency band itself of an antenna including the first antenna structure 504 of FIG. 8A may not be changed, but satellite communication performance (e.g., circular polarization performance) may be enhanced.

As an example, as illustrated in FIG. 8B, the additional antenna structure 810 may be connected to the feed terminal 541 of the first antenna structure 504. For example, one end of the additional antenna structure 810 may be connected to the feed terminal 541 of the first antenna structure 504, and the other end of the additional antenna structure 810 may be connected to the switch 930 or a transmission line for connecting to the switch 930. As such, the additional antenna structure 810 may branch or extend from the feed terminal 541 of the first antenna structure 504. Due to the addition of such an additional antenna structure 810, a pattern, shape, or characteristic of an antenna including the first antenna structure 504 of FIG. 8B may be different from a pattern, shape, or characteristic of an antenna including the first antenna structure 504 of FIG. 5. As an example, due to the addition of the additional antenna structure 810, a frequency band itself of an antenna including the first antenna structure 504 of FIG. 8A may not be changed, but satellite communication performance (e.g., circular polarization performance) may be enhanced.

According to an embodiment, the first antenna structure 504 (or an antenna pattern or shape of the first antenna structure 504) is formed by a portion of a conductive housing member (e.g., the conductive housing member 530 of FIG. 5) forming a side surface (e.g., a side surface) of the housing of the electronic device 101, and the additional antenna structure 810 (or an antenna pattern or shape of the additional antenna structure 810) may be formed on a plane substantially perpendicular to a plane (e.g., the side surface) on which the first antenna structure 504 (or the antenna pattern or shape of the first antenna structure 504) is formed. As an example, the first antenna structure 504 (or the antenna pattern or shape of the first antenna structure 504) is formed on a surface corresponding to a upper surface (e.g., a upper surface parallel to the XZ plane of FIG. 7) among side surfaces of the electronic device 101, and the additional antenna structure 810 (or the antenna pattern or shape of the additional antenna structure 810) may be formed on a plane (e.g., a plane parallel to the XY plane of FIG. 7) substantially perpendicular to the plane on which the first antenna structure 504 (or the antenna pattern or shape of the first antenna structure 504) is formed.

According to an embodiment, the first antenna structure 504 (or the antenna pattern or shape of the first antenna structure 504) is formed by a portion of a conductive member forming a first surface (e.g., a plane parallel to the XY plane of FIG. 7) of the electronic device 101, and the additional antenna structure 810 (or the antenna pattern or shape of the additional antenna structure 810) may be formed on a plane (e.g., a plane parallel to the XY plane of FIG. 7) substantially the same as or parallel to the plane on which the first antenna structure 504 (or the antenna pattern or shape of the first antenna structure 504) is formed.

According to an embodiment, the additional antenna structure 810 may be formed on a support plate located on a plane substantially parallel to a front surface or a rear surface (e.g., the front surface or the rear surface parallel to the XY plane of FIG. 7). As an example, the additional antenna structure 810 may be formed on an antenna plate (e.g., the antenna plate 390 of FIG. 4), a supporting member (e.g., the first supporting member 372 of FIG. 4), a printed circuit board (e.g., the printed circuit board 340 of FIG. 4), and/or a rear plate (e.g., the rear plate 380 of FIG. 4).

According to an embodiment, the shape (or pattern) of the additional antenna structure 810 may be set to a shape that causes a metric (e.g., axis ratio (AR)) measuring satellite communication performance (e.g., performance of circular polarization) for satellite communication for an antenna including the first antenna structure 504 to be equal to or greater than a set criterion or a shape that causes the metric to be enhanced to the set criterion or more. As an example, the shape of the additional antenna structure 810 may have a rectangular patch shape, as illustrated in FIGS. 8A and 8B, but the disclosure is not limited thereto. For example, the shape of the additional antenna structure 810 may have a shape of various patterns such as a linear shape or a spiral shape.

According to an embodiment, a length, width, and/or height of the additional antenna structure 810 may be set to a length, width, and/or height that causes an AR value for an antenna including the first antenna structure 504 to be equal to or greater than a set criterion or a length, width, and/or height that causes the AR value to be enhanced to the set criterion or more.

As illustrated in FIG. 9, due to the addition of the additional antenna structure 810, an antenna structure (an additional structure) including a sub branch 910 corresponding to the additional antenna structure 810 and a switch 930 located on the sub branch 910 may be added to an antenna structure (a basic structure) including a main branch 920 corresponding to the first antenna structure 504, a feed branch 921 corresponding to a signal path connected to the feed terminal 541, and a short branch 922 corresponding to a ground path (or a short path) connected to the ground terminal 542. The basic antenna structure may be, e.g., an antenna structure corresponding to the fourth antenna 504 of FIG. 5.

According to an embodiment, the sub branch 910 may be connected to, e.g., the ground terminal 542, as illustrated in FIG. 8A, or may be connected to the feed terminal 541, as illustrated in FIG. 8B.

According to an embodiment, one end of the switch 930 is connected to the sub branch 910 (or the additional antenna structure 810 corresponding to the sub branch 910), and the other end of the switch 930 may be connected to a ground plane 901 (e.g., the printed circuit board 340 of FIG. 4). For example, one end of the additional antenna structure 810 may be connected to one end of the switch 930, and the other end of the additional antenna structure 810 may be connected to the feed terminal 541 or the ground terminal 542.

According to an embodiment, the switch 930 may be disposed on the ground plane 901 (e.g., the printed circuit board 340 of FIG. 4) of the electronic device 101.

According to an embodiment, the electronic device 101 may operate the switch 930 to a first state (e.g., a closed state) in case that a satellite communication mode is used, and may operate the switch 930 to a second state (e.g., an open state) in case that the satellite communication mode is not used (e.g., in case that a general call mode is used). As such, the switch 930 may selectively ground the additional antenna structure 810, e.g., according to whether the satellite communication mode is used. Accordingly, the switch 930 may selectively connect the additional antenna structure 810 to the first antenna structure 504, e.g., according to whether the satellite communication mode is used.

According to an embodiment, in case that the switch 930 is closed, the corresponding antenna may have an antenna structure including the main branch 920, the feed branch 921, the short branch 922, and the sub branch 910. An antenna having such an antenna structure including the sub branch 910 may have enhanced circular polarization performance for satellite communication, compared to an antenna having a basic antenna structure not including the sub branch 910. It may be identified that an antenna having an antenna structure including the sub branch 910 (or the additional antenna structure 810) radiates an RF signal with circular polarization 1010, as illustrated in FIG. 10. As such, in case that satellite communication is needed, performance of satellite communication may be enhanced by adding the sub branch 910 (or the additional antenna structure 810) to the basic antenna structure. Accordingly, the electronic device 101 may provide a satellite communication service having high performance.

According to an embodiment, in case that the switch 930 is open, the corresponding antenna may have a basic antenna structure from which the sub branch 910 is excluded. It may be identified that an antenna having a basic antenna structure not including the sub branch 910 (or the additional antenna structure 810) radiates an RF signal with linear polarization 710, as illustrated in FIG. 7 or FIG. 10. As such, in case that satellite communication is not needed, characteristics of the basic antenna (e.g., a GPS antenna) may be maintained by excluding the sub branch 910. Accordingly, a communication service (e.g., a GPS service) using the basic antenna may be smoothly provided by the electronic device 101 having an antenna in which the additional antenna is configurable.

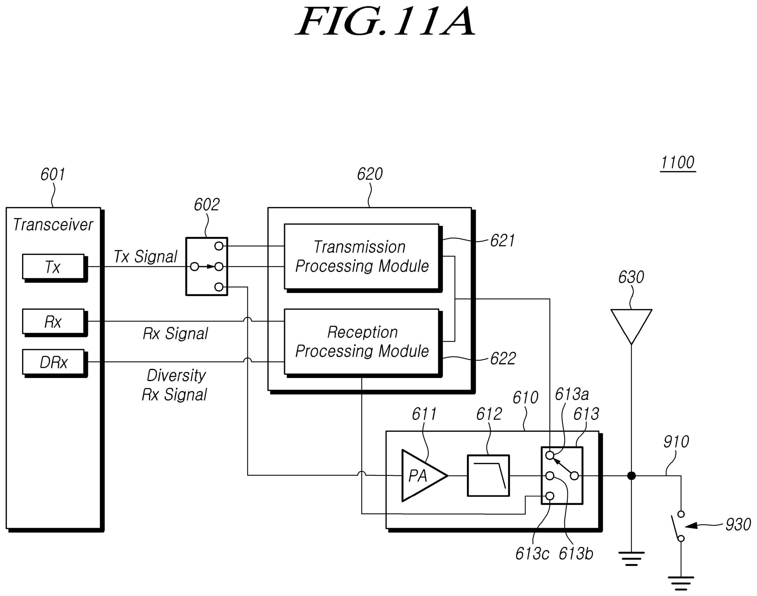

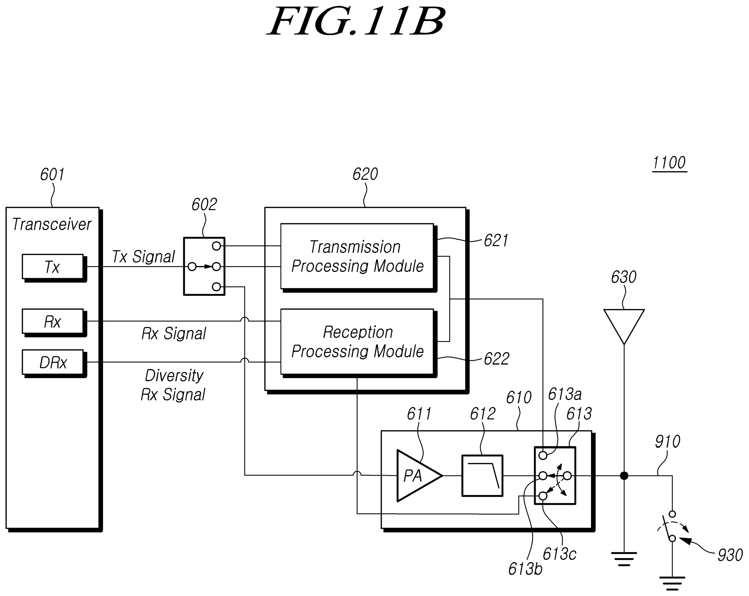

FIGS. 11A and 11B illustrate an example of a wireless communication module for supporting satellite communication according to an embodiment of the disclosure.

Referring to FIGS. 11A and 11B, a wireless communication module 1100 (e.g., the wireless communication module 192 of FIG. 1 or FIG. 2, or the wireless communication module 600 of FIG. 6) may include a transceiver 601 (e.g., the transceiver 210 of FIG. 2), a switch 602, a first module 610, a second module 620, and/or an antenna 630 (e.g., the antenna module 197 of FIG. 1, the antenna 220 of FIG. 2, or the fourth antenna 504 of FIG. 5). A description of each component may refer to the description of FIG. 6.

The wireless communication module 1100 of FIGS. 11A and 11B may further include an additional antenna structure (e.g., the additional antenna structure 810 of FIGS. 8A and 8B), compared to the wireless communication module 600 of FIG. 6. As an example, the wireless communication module 1100 of FIGS. 11A and 11B may include a sub branch 910 corresponding to the additional antenna structure and a switch 930 on the sub branch 910. According to an embodiment, the sub branch 910 may be connected to, e.g., a ground terminal (e.g., the ground terminal 542 of FIG. 5), as illustrated in FIG. 8A, or may be connected to a feed terminal (e.g., the feed terminal 541 of FIG. 5), as illustrated in FIG. 8B. A description of the sub branch 910 and the switch 930 may refer to the descriptions of FIGS. 8A, 8B, and 9.

According to an embodiment, in case that the communication mode is a general call mode providing cellular communication, as in FIG. 11A, the switch 613 may be connected to the first contact 613a, and the switch 930 may be in an open state. In this case, the additional antenna structure is not connected to the basic antenna structure of the antenna 630. For example, in case that the switch 930 is in the open state, the entire antenna structure may have an antenna structure including a main branch (e.g., the main branch 920 of FIG. 9) corresponding to a basic antenna structure (e.g., the first antenna structure 504 of FIG. 5), a feed branch (e.g., the feed branch 921 of FIG. 9) corresponding to a signal path connected to a feed terminal (e.g., the feed terminal 541 of FIG. 5), and a short branch (e.g., the short branch 922 of FIG. 9) corresponding to a short path connected to a ground terminal (e.g., the ground terminal 542 of FIG. 5). Accordingly, an RF transmission path and an RF reception path of the general call mode are supported, and basic characteristics of the antenna 630 may be maintained.

According to an embodiment, in case that the communication mode is a satellite communication mode providing satellite communication, as in FIG. 11B, the switch 613 may be connected to the second contact 613b or the third contact 613c, and the switch 930 may be in a closed state. In this case, the additional antenna structure may be connected to the basic antenna structure (e.g., the fourth antenna 504 of FIG. 5) of the antenna 630. For example, in case that the switch 930 is in the closed state, the entire antenna structure may have an antenna structure including a main branch (e.g., the main branch 920 of FIG. 9) corresponding to a basic antenna structure (e.g., the first antenna structure 504 of FIG. 5), a feed branch (e.g., the feed branch 921 of FIG. 9) corresponding to a signal path connected to a feed terminal (e.g., the feed terminal 541 of FIG. 5), a short branch (e.g., the short branch 922 of FIG. 9) corresponding to a short path connected to a ground terminal (e.g., the ground terminal 542 of FIG. 5), and a sub branch 910 corresponding to an additional antenna structure (e.g., the additional antenna structure 810 of FIGS. 8A and 8B).

As an example, in the case of a transmission operation of the satellite communication mode, the switch 613 may be connected to the second contact 613b, and the switch 930 may be in the closed state. Accordingly, an RF transmission path of the satellite communication mode is supported, and characteristics of the antenna 630 may be changed (e.g., AR performance is enhanced) for satellite communication.

As an example, in the case of a reception operation of the satellite communication mode, the switch 613 may be connected to the third contact 613c, and the switch 930 may be in the closed state. Accordingly, an RF reception path of the satellite communication mode is supported, and characteristics of the antenna 630 may be changed (e.g., AR performance is enhanced) for satellite communication.

According to an embodiment, in case that the switch 613 is connected to the first contact 613a and the switch 930 is in the open state (a first switching state), the first module 610 may, during transmission, transfer an RF signal of a first frequency band (e.g., a frequency band for satellite communication) processed by the second module 620 to the antenna 630 without separate processing, and may, during reception, transfer an RF signal of the first frequency band (e.g., the frequency band for satellite communication) received through the antenna 630 to the second module 620 without separate processing. In this case, the second module 620 may, during transmission, post-process an RF signal of the first frequency band (e.g., the frequency band for satellite communication) converted by the transceiver 601 using the transmission processing module 621 and transmit it through the antenna 630, and may, during reception, pre-process an RF signal of the first frequency band (e.g., the frequency band for satellite communication) received through the antenna 630 using the reception processing module 622 and transfer it to the transceiver 601. An RF signal transmitted and received through the antenna 630 in the first switching state may have a characteristic of linear polarization (e.g., the linear polarization 710 of FIG. 7 or FIG. 10).

According to an embodiment, in case that the switch 613 is connected to the second contact 613b and the switch 930 is in the closed state (a second switching state), the first module 610 may post-process an RF signal of the first frequency band (e.g., the frequency band for satellite communication) converted by the transceiver 601 and transmit it through the antenna 630. An RF signal transmitted through the antenna 630 in the second switching state may have a characteristic of circular polarization (e.g., the circular polarization 1010 of FIG. 10).

According to an embodiment, in case that the switch 613 is connected to the third contact 613c and the switch 930 is in the closed state (a third switching state), the first module 610 may transfer an RF signal of the first frequency band (e.g., the frequency band for satellite communication) received through the antenna 630 to the second module 620 without separate processing. In this case, the second module 620 may pre-process the transferred RF signal of the first frequency band (e.g., the frequency band for satellite communication) using the reception processing module 622 and transfer it to the transceiver 601. An RF signal received through the antenna 630 in the third switching state may have a characteristic of circular polarization (e.g., the circular polarization 1010 of FIG. 10).

As described above, in case that the antenna 630 including the additional antenna structure is used, transmission/reception of an RF signal having enhanced circular polarization performance for satellite communication may be possible through the wireless communication module 1100.

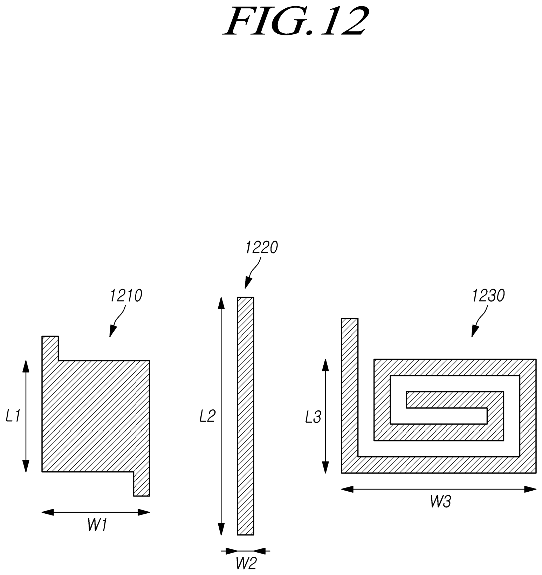

FIG. 12 illustrates examples of an additional antenna structure according to an embodiment of the disclosure.

Referring to FIG. 12, the additional antenna structure (e.g., the additional antenna structure 810 of FIGS. 8A and 8B) may have various shapes.

As an example, the additional antenna structure may have a rectangular patch shape 1210, which is the same as the shape of the additional antenna structure 810 of FIG. 8, for example. The rectangular patch shape 1210 of the additional antenna structure may have a length of L1 and a width of W1.

As an example, the additional antenna structure may have a linear shape 1220. The linear shape 1220 of the additional antenna structure may have a length of L2 and a width of W2. According to an embodiment, in order to provide the same antenna performance, the length L2 of the linear shape 1220 may be longer than the length L1 of the rectangular patch shape 1210, and the width W2 of the linear shape 1220 may be shorter than the width W1 of the rectangular patch shape 1210.

As an example, the additional antenna structure may have another pattern shape such as a first pattern shape 1230. The first pattern shape 1230 of the additional antenna structure may have a length of L3 and a width of W3.

Antenna characteristics may be changed by the shape, length, and/or width of such an additional antenna structure.

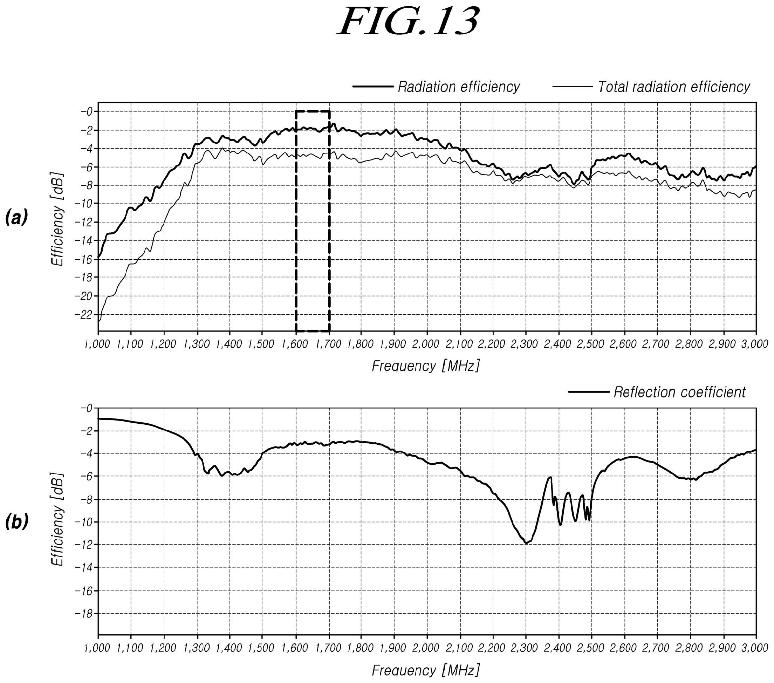

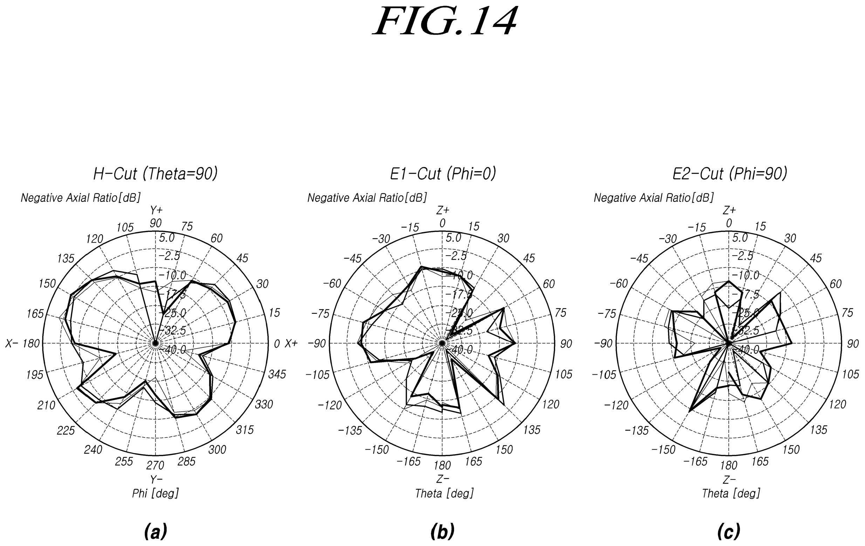

FIG. 13 is a view illustrating passive gain of an antenna not including an additional antenna structure according to an embodiment of the disclosure. FIG. 14 is a view illustrating AR performance for an antenna not including an additional antenna structure according to an embodiment of the disclosure.

The antenna of the embodiments of FIGS. 13 and 14 corresponds to an antenna (e.g., the fourth antenna 504 of FIG. 5) not including an additional antenna structure.

Referring to (a) and (b) of FIG. 13, in case that the corresponding antenna is used for satellite communication, it may be identified that passive gain of the antenna in a satellite communication band (e.g., 1616 MHz to 1626.5 MHz) is at a level of about -4.6 dB, and performance of the antenna itself is maintained.

Referring to (a), (b), and (c) of FIG. 14, it may be identified that an AR value for the corresponding antenna is about -17.8 dB, indicating that circular polarization performance for satellite communication is low.

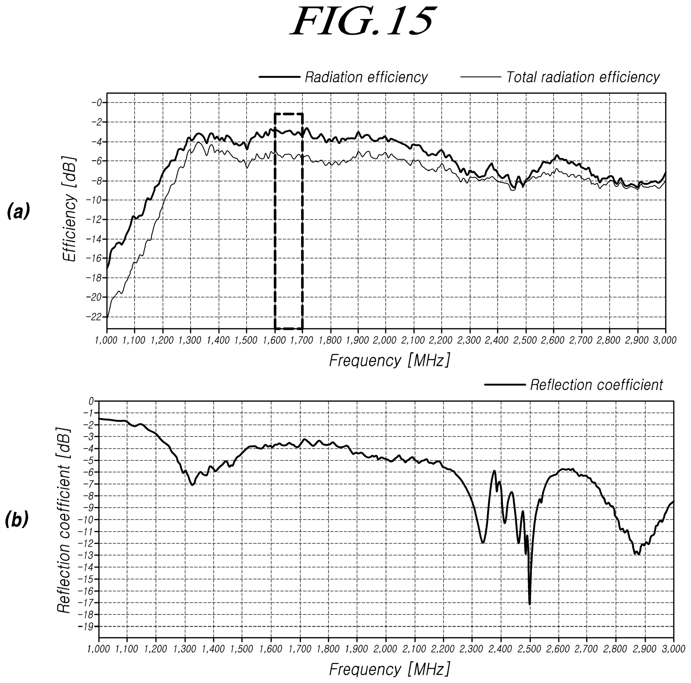

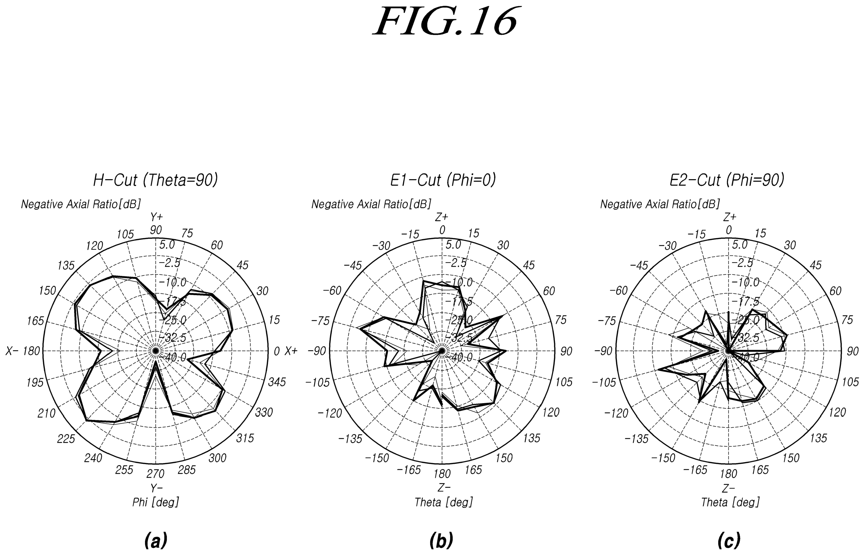

FIG. 15 is a view illustrating passive gain of an antenna in which an additional antenna structure is configurable according to an embodiment of the disclosure. FIG. 16 is a view illustrating AR performance for an antenna in which an additional antenna structure is configurable according to an embodiment of the disclosure.

The antenna of the embodiments of FIGS. 15 and 16 corresponds to an antenna that may include an additional antenna structure (e.g., 810 of FIGS. 8A and 8B) and a basic antenna structure (e.g., the fourth antenna 504 of FIG. 5), but the additional antenna structure is not connected to the basic antenna structure because a switch (e.g., the switch 930 of FIG. 9) is in an open state.

Referring to (a) and (b) of FIG. 15, in case that the corresponding antenna is used for satellite communication, passive gain of the antenna in a satellite communication band (e.g., 1616 MHz to 1626.5 MHz) corresponds to about -5.4 dB. This is at a level almost similar to -4.6 dB, which is passive gain of an antenna including only the basic antenna structure of FIG. 6, and it may be identified that performance of the antenna itself is maintained despite the addition of the additional antenna structure.

Referring to (a), (b), and (c) of FIG. 16, an AR value for the corresponding antenna corresponds to about -12.14 dB. This corresponds to a level similar to -17.8 dB, which is an AR value of an antenna including only the basic antenna structure of FIG. 6.

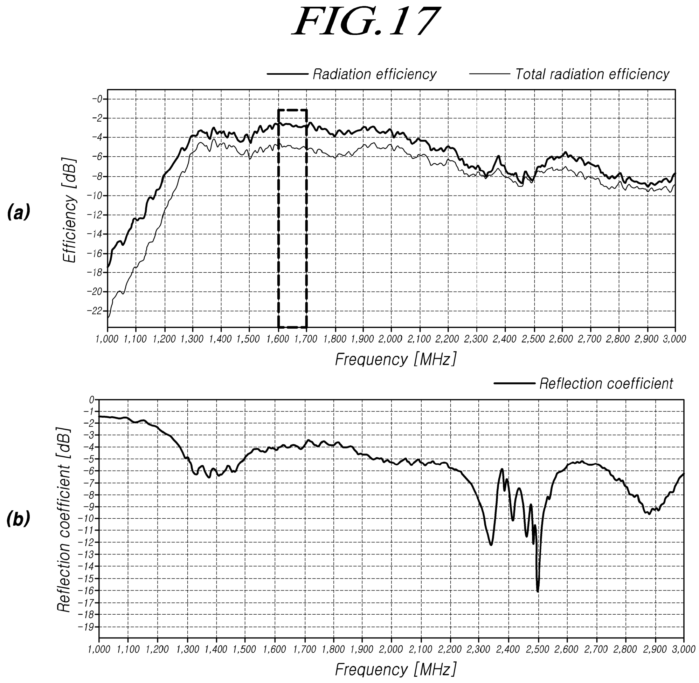

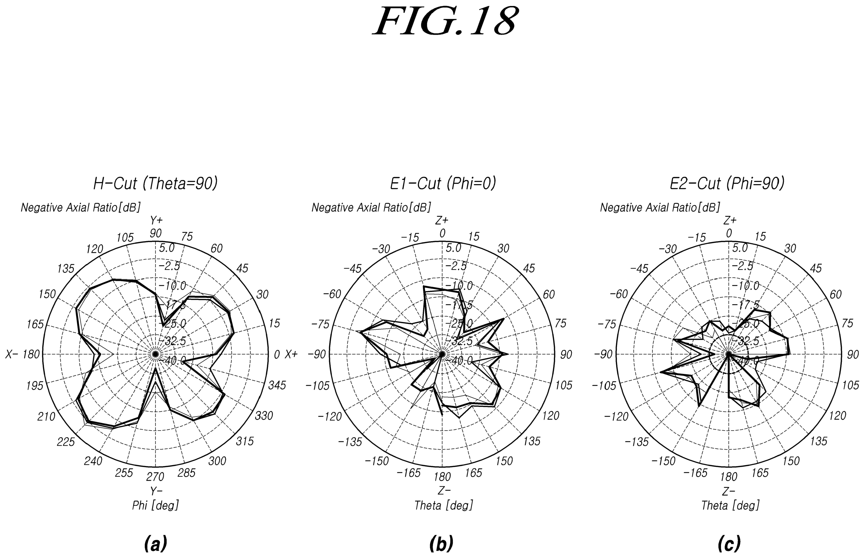

FIG. 17 is a view illustrating passive gain of an antenna in which an additional antenna structure is configurable according to an embodiment of the disclosure. FIG. 18 is a view illustrating AR performance for an antenna in which an additional antenna structure is configurable according to an embodiment of the disclosure.

The antenna of the embodiments of FIGS. 17 and 18 corresponds to an antenna that may include an additional antenna structure (e.g., 810 of FIGS. 8A and 8B) and a basic antenna structure (e.g., the fourth antenna 504 of FIG. 5), and the additional antenna structure is connected to the basic antenna structure because a switch (e.g., the switch 930 of FIG. 9) is in a closed state.

Referring to (a) and (b) of FIG. 17, in case that the corresponding antenna is used for satellite communication, passive gain of the antenna in a satellite communication band (e.g., 1616 MHz to 1626.5 MHz) corresponds to about -4.8 dB. This is at a level almost similar to -4.6 dB, which is passive gain of an antenna including only the basic antenna structure of FIG. 6, and it may be identified that performance of the antenna itself is maintained despite the addition of the additional antenna structure.

Referring to (a), (b), and (c) of FIG. 18, an AR value for the corresponding antenna corresponds to about -8.15 dB. This corresponds to an AR value enhanced by about 10 dB, compared to -17.8 dB, which is an AR value of an antenna including only the basic antenna structure of FIG. 6. It may be identified that circular polarization performance for satellite communication is enhanced through the connection of the additional antenna structure to the basic antenna structure. Accordingly, quality of satellite communication may be enhanced.

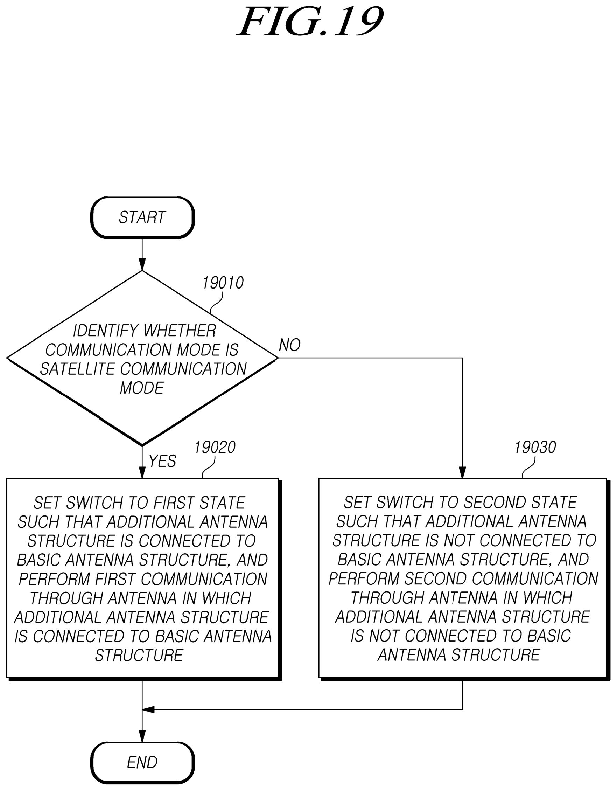

FIG. 19 illustrates a method of operating an electronic device according to an embodiment of the disclosure.

Referring to FIG. 19, an electronic device (e.g., the electronic device 101 of FIG. 1) may identify whether a communication mode is a satellite communication mode (19010). The satellite communication mode may be, e.g., a mode providing a communication service (e.g., satellite voice communication or a satellite data communication service) using satellite communication.

In case that the communication mode is the satellite communication mode, the electronic device may set a switch to a first state such that an additional antenna structure (e.g., the antenna structure 810 of FIGS. 8A and 8B) is connected to a basic antenna structure (e.g., the antenna 200 of FIG. 2, the fourth antenna 504 of FIG. 5), and may perform first communication through an antenna in which the additional antenna structure is connected to the basic antenna structure (19020). Accordingly, a first communication service (e.g., a satellite communication service) may be provided.

In case that the communication mode is not the satellite communication mode (e.g., a general communication mode), the electronic device may set the switch to a second state such that the additional antenna structure is not connected to the basic antenna structure, and may perform second communication through an antenna in which the additional antenna is not connected to the basic antenna (19030). The general communication mode may be, e.g., a mode providing a communication service (e.g., cellular voice communication or a cellular data communication service) using cellular communication. Accordingly, a second communication service (e.g., a GPS service) may be provided.

According to an embodiment, a frequency band used for first communication and second communication may be substantially the same frequency band. As an example, the frequency band used for first communication and second communication may correspond to a frequency band supported by a basic antenna structure (e.g., the antenna 200 of FIG. 2, the fourth antenna 504 of FIG. 5). Accordingly, without a change in the frequency band, a GPS service or a satellite communication service may be provided through the corresponding antenna according to a user's selection.

According to an embodiment, an electronic device 101 may include a housing 310 including a conductive housing member 530; a printed circuit board 340 disposed within the housing 310; a first antenna structure 220; 504 formed by a portion of the conductive housing member 530 and supporting a frequency band for satellite communication; a second antenna structure 810 disposed within the housing 310 and connectable to the first antenna structure 220; 504; and a switch 930 disposed on the printed circuit board 340 and selectively connecting the second antenna structure 810 to the first antenna structure 220; 504, wherein a first end of the switch 930 is connected to the second antenna structure 810, and a second end of the switch 930 may be connected to a ground.

According to an embodiment, the conductive housing member 530 may correspond to a conductive side member forming a side surface of the housing 310, and the conductive housing member 530 may include metal.

According to an embodiment, the second antenna structure 810 may be formed on a second plane perpendicular to a first plane on which the first antenna structure 220; 504 is formed.

According to an embodiment, in case that the second antenna structure 810 is electrically connected to the first antenna structure 220; 504, a shape or position of the second antenna structure 810 may be set to a shape or position that causes performance for a satellite communication service provided through an antenna including the first antenna structure 220; 504 and the second antenna structure 810 to satisfy a set criterion, and the performance for the satellite communication service may correspond to circular polarization performance or axis ratio (AR) performance corresponding to the circular polarization performance.

According to an embodiment, the first antenna structure 220; 504 and the second antenna structure 810 may be formed on a same plane, and a direction in which the first antenna structure 220; 504 extends may be a direction perpendicular to a direction in which the second antenna structure 810 extends.

According to an embodiment, in case that the second antenna structure 810 is electrically connected to the first antenna structure 220; 504 through the switch 930, a satellite communication service (e.g., a satellite telephone service) may be provided through an antenna including the first antenna structure 220; 504 electrically connected to the second antenna structure 810 and, in case that the second antenna structure 810 is not electrically connected to the first antenna structure 220; 504 through the switch 930, a global positioning system (GPS) service may be provided through an antenna including the first antenna structure 220; 504 not electrically connected to the second antenna structure 810.

According to an embodiment, a first end of the second antenna structure 810 may contact the feed terminal 221; 541 of the first antenna structure 220; 504.

According to an embodiment, a first end of the second antenna structure 810 may contact the ground terminal 222; 542 of the first antenna structure 220; 504.

According to an embodiment, a method of operating an electronic device 101 may include an operation of identifying whether a communication mode is a satellite communication mode; an operation of, in case that the communication mode is the satellite communication mode, setting a switch 930 to a first state such that a second antenna structure 810 is connected to a first antenna structure 220; 504, and providing a first communication service through an antenna including the first antenna structure 220; 504 to which the second antenna structure 810 is connected; and an operation of, in case that the communication mode is not the satellite communication mode, setting the switch 930 to a second state such that the second antenna structure 810 is not connected to the first antenna structure 220; 504, and providing a second communication service through an antenna including the first antenna structure 220; 504 to which the second antenna structure 810 is not connected, wherein the first antenna structure 220; 504 may be formed by a portion of a conductive housing member 530 included in a housing 310 and support a frequency band for satellite communication, the switch 930 may be disposed on a printed circuit board 340 within the housing, a first end of the switch 930 may be connected to the second antenna structure 810, and a second end of the switch 930 may be connected to a ground.

According to an embodiment, the first communication service may correspond to a satellite communication service, and the second communication service may correspond to a GPS service.

According to an embodiment, the conductive housing member 530 may correspond to a conductive side member forming a side surface of the housing 310, and the conductive housing member 530 may include metal.

According to an embodiment, the second antenna structure 810 may be formed on a second plane perpendicular to a first plane on which the first antenna structure 220; 504 is formed.

According to an embodiment, in case that the second antenna structure 810 is electrically connected to the first antenna structure 220; 504, a shape or position of the second antenna structure 810 may be set to a shape or position that causes performance for a satellite communication service provided through an antenna including the first antenna structure 220; 504 and the second antenna structure 810 to satisfy a set criterion, and the performance for the satellite communication service may correspond to circular polarization performance or axis ratio (AR) performance corresponding to the circular polarization performance.

According to an embodiment, the first antenna structure 220; 504 and the second antenna structure 810 may be formed on a same plane, and a direction in which the first antenna structure 220; 504 extends may be a direction perpendicular to a direction in which the second antenna structure 810 extends.

According to an embodiment, a first end of the second antenna structure 810 may contact the ground terminal 222; 542 of the first antenna structure 220; 504.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the present disclosure have been described above, various changes may be made thereto without departing from the scope of the present disclosure. Thus, the scope of the present invention should not be limited to the above-described embodiments, and should rather be defined by the following claims and equivalents thereof.

## Claims

1. An electronic device (101), comprising:
a housing (310) comprising a conductive housing member (530);
a printed circuit board (340) disposed within the housing (310);
a first antenna structure (220; 504) formed by a portion of the conductive housing member (530) and configured to support a frequency band for satellite communication;
a second antenna structure (810) disposed within the housing (310) and configured to be connectable to the first antenna structure (220; 504); and
a switch (930) disposed on the printed circuit board (340) and configured to selectively connect the second antenna structure (810) to the first antenna structure (220; 504);
wherein a first end of the switch (930) is connected to the second antenna structure (810), and
wherein a second end of the switch (930) is connected to ground.

2. The electronic device (101) of claim 1,
wherein the conductive housing member (530) corresponds to a conductive side member forming a side surface of the housing (310), and
wherein the conductive housing member (530) includes metal.

3. The electronic device (101) of claim 1 or 2,
wherein the second antenna structure (810) is formed on a second plane perpendicular to a first plane on which the first antenna structure (220; 504) is disposed.

4. The electronic device (101) of any one of claims 1 to 3,
wherein in case that the second antenna structure (810) is electrically connected to the first antenna structure (220; 504), a shape or a position of the second antenna structure (810) is configured to have a shape or a position to allow performance for a satellite communication service provided via an antenna to satisfy determined criteria, the antenna including the first antenna structure (220; 504) and the second antenna structure (810), and
wherein the performance for the satellite communication service corresponds to circular polarization performance or an axis ratio (AR) performance corresponding to the circular polarization performance.

5. The electronic device (101) of any one of claims 1 to 4,
wherein the first antenna structure (220; 504) and the second antenna structure (810) are disposed on a same plane, and
wherein a direction in which the first antenna structure (220; 504) extends is a direction perpendicular to a direction in which the second antenna structure (810) extends.

6. The electronic device (101) of any one of claims 1 to 5,
wherein in case that the second antenna structure (810) is electrically connected to the first antenna structure (220; 504) through the switch (930), a satellite communication service is provided through an antenna including the second antenna structure (810) and the first antenna structure (220; 504) electrically connected to the second antenna structure (810), and
wherein in case that the second antenna structure (810) is not electrically connected to the first antenna structure (220; 504) through the switch (930), a global positioning system (GPS) service is provided through an antenna including the first antenna structure (220; 504) not electrically connected to the second antenna structure (810).

7. The electronic device (101) of any one of claims 1 to 6,
wherein a first end of the second antenna structure (810) is connected to the first antenna structure (220; 504) through a first terminal (541),
wherein a second end of the second antenna structure (810) is connected to the first end of the switch (930), and
wherein the first terminal corresponds to a feed terminal (221; 541) of the first antenna structure (220; 504).

8. The electronic device (101) of any one of claims 1 to 7,
wherein a first end of the second antenna structure (810) is connected to the first antenna structure (220; 504) through a second terminal (542),
wherein a second end of the second antenna structure (810) is connected to the first end of the switch (930), and
wherein the second terminal corresponds to a ground terminal (222; 542) of the first antenna structure (220; 504).

9. A method of operating an electronic device (101), the method comprising:
identifying whether a communication mode is a satellite communication mode;
based on identifying that the communication mode is the satellite communication mode, configuring a switch (930) to a first state such that a second antenna structure (810) is connected to a first antenna structure (220; 504), and providing a first communication service through an antenna including the second antenna structure (810) and the first antenna structure (220; 504) to which the second antenna structure (810) is connected; and
based on identifying that the communication mode is not the satellite communication mode, configuring the switch (930) to a second state such that the second antenna structure (810) is not connected to the first antenna structure (220; 504), and providing a second communication service through an antenna including the first antenna structure (220; 504) to which the second antenna structure (810) is not connected,
wherein the first antenna structure (220; 504) is formed by a portion of a conductive housing member (530) included in a housing (310) and is configured to support a frequency band for satellite communication,
wherein the switch (930) is disposed on a printed circuit board (340) within the housing,
wherein a first end of the switch (930) is connected to the second antenna structure (810), and
wherein a second end of the switch (930) is connected to a ground.

10. The method of claim 9,
wherein the first communication service corresponds to a satellite communication service, and
wherein the second communication service corresponds to a GPS service.

11. The method of claim 9 or 10,
wherein the conductive housing member (530) corresponds to a conductive side member forming a side surface of the housing (310), and the conductive housing member (530) includes metal.

12. The method of any one of claims 9 to 11,
wherein the second antenna structure (810) is formed on a second plane perpendicular to a first plane on which the first antenna structure (220; 504) is disposed.

13. The method of any one of claims 9 to 12,
wherein in case that the second antenna structure (810) is electrically connected to the first antenna structure (220; 504), a shape or position of the second antenna structure (810) is set to a shape or position that causes performance for a satellite communication service provided through an antenna including the first antenna structure (220; 504) and the second antenna structure (810) to satisfy a set criterion, and
wherein the performance for the satellite communication service corresponds to circular polarization performance or axis ratio (AR) performance corresponding to the circular polarization performance.

14. The method of any one of claims 9 to 13,
wherein the first antenna structure (220; 504) and the second antenna structure (810) are disposed on a same plane, and
wherein a direction in which the first antenna structure (220; 504) extends is a direction perpendicular to a direction in which the second antenna structure (810) extends.

15. The method of any one of claims 9 to 14,
wherein a first end of the second antenna structure (810) is connected to the first antenna structure (220; 504) through a second terminal (542),
wherein a second end of the second antenna structure (810) is connected to a first end of the switch (930), and
wherein the second terminal corresponds to a ground terminal (222; 542) of the first antenna structure (220; 504).
